# EUROPÄISCHE PATENTANMELDUNG

(11) **EP 0 849 300 A1**
(43) Veröffentlichungstag der Anmeldung: **24.06.1998**
(21) Anmeldenummer: 97122268.2
(22) Anmeldetag: 17.12.1997
(51) Int. Cl.: C08G 18/65, C08G 18/67, C08J 3/28, C09D 175/04

(54) **Polyurethane mit kovalent gebundenen Photoinitiatoreinheiten**

(30) Priorität: 19.12.1996 DE 19653183
(71) Anmelder: BASF AKTIENGESELLSCHAFT, 67056 Ludwigshafen (DE)
(72) Erfinder: Kokel, Nicolas Dr., 67069 Ludwigshafen (DE); Larbig, Harald, Dr., 67063 Ludwigshafen (DE); Menzel, Klaus, 67069 Ludwigshafen (DE); Beck, Erich, Dr., 68528 Ladenburg (DE); Reich, Wolfgang, Dr., 67133 Maxdorf (DE); Voit, Guido, Dr., 69198 Schriesheim (DE)
(74) Vertreter: Isenbruck, Günter, Dr.

(57) **Zusammenfassung**

In Wasser im wesentlichen selbstdispergierbares Polyurethan, erhältlich durch Umsetzung von
a) mindestens einem Polyisocyanat mit
b) mindestens einem Polyol und
c) mindestens einem Photoinitiator der allgemeinen Formel I 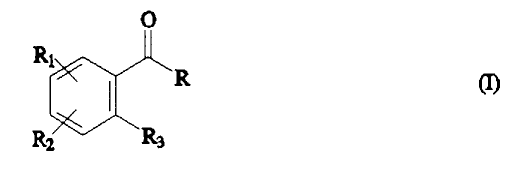 wobei R für einen Rest der Formel II 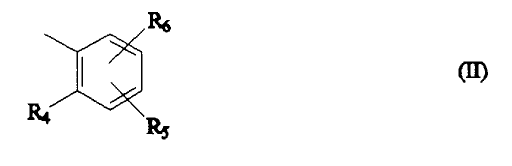 oder für -CR⁷R⁸R⁹, P(=O)(R¹⁰)₂ oder SO₂R¹¹ steht,
   wobei das Zahlenmittel des Molekulargewichts Mₙ des Polyurethans größer als 2700 ist, sowie dessen Verwendung. Weiterhin betrifft die Erfindung wäßrige Polyurethanharzdispersionen und Beschichtungsmittelzusammensetzungen, enthaltend die erfindungsgemäßen Polyurethane, sowie deren Verwendung.

## Beschreibung

Die Erfindung betrifft ein wasserlösliches und/oder wasserdispergierbares Polyurethan (PU) mit kovalent an die PU-Kette gebundenen Photoinitiatoreinheiten, ein Verfahren zur Herstellung eines solchen Polyurethans, wäßrige Lösungen und/oder Dispersionen, die ein solches Polyurethan enthalten, und ein Verfahren zur Herstellung einer derartigen wäßrigen Polyurethandispersion.

Wäßrige Dispersionen von Polyurethanen sind bekannt (siehe z.B. D.G. Oertel "Kunststoff Handbuch 7", 2. Auflage, Carl Hauser Verlag München/Wien, S. 24 bis 25 und S. 571 bis 574). Diese in Wasser dispergierten Polyurethane werden als Bindemittel (nachfolgend auch PU-Bindemittel genannt) z.B. in Beschichtungsmittelzusammensetzungen zum Lackieren, Bedrucken, Verkleben oder in sonstiger Weise zum Beschichten von Substraten verwendet. Die so erhältlichen Beschichtungen zeigen üblicherweise eine günstige Eigenschaftskombination in bezug auf Haftung, Abriebfestigkeit, Kälteflexibilität, Zähigkeit und Glanz.

Unter *Beschichtungsmittelzusammensetzungen* werden im erfindungsgemäßen Sinne gebrauchsfertige Dispersionen der in Rede stehenden PU-Bindemittel, gegebenenfalls mit weiteren Zusatzstoffen versehen, verstanden. Unter einer *Beschichtung* wird im Sinne der Erfindung sowohl eine oberflächenversiegelnde Schicht (in der Regel ein 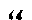 Lack 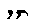 ) als auch eine Verklebung verstanden, insofern nichts anderes angegeben ist. Unter einer *wäßrigen Polyurethandispersion* kann daher sowohl die wäßrige Dispersion der PU-Bindemittel als auch (wenn die Dispersion ohne Zugabe weiterer Zusatzstoffe zur Herstellung einer Beschichtung gebrauchsfertig ist) eine Beschichtungsmittelzusammensetzung im o.g. Sinne verstanden werden.

Ein weiterer Vorteil der wäßrigen Polyurethandispersionen liegt in der weitgehenden Abwesenheit organischer Lösemittel, was sie zu ökologisch vorteilhaften Alternativen zu bekannten, lösemittelhaltigen Lack- oder Klebstoffsystemen macht.

Nachteilig wirkt sich bei den in wäßriger Lösung dispergierten PU-Bindemitteln die zwangsläufige Anwesenheit von Emulgatoren oder hydrophilierenden Gruppen aus. Hierdurch wird die Beständigkeit der Beschichtung oder Verklebung gegenüber beispielsweise Wasser, Lösemitteln, Säuren, Alkalien, Tensiden oder anderen Haushaltschemikalien stark herabgesetzt. Eine dauerhafte Einwirkung der oben genannten Chemikalien führt mindestens zu einer Herabsetzung der Beschichtungsqualität und gegebenenfalls sogar zu einer vollständigen Zerstörung der Beschichtung.

Zur Lösung dieses Problems wurde der Versuch unternommen, wäßrige Polyurethandispersionen aus durch Bestrahlung härtbare Gruppen (in der Regel olefinisch ungesättige Doppelbindungen) aufweisenden PU-Bindemitteln durch den Zusatz von niedermolekularen Photoinitiatoren mittels UV-Strahlung vernetzbar zu machen.

So beschreibt die DE-A1 30 05 034 die Herstellung von Beschichtungen auf elektrisch leitfähigen Gegenständen, wobei das PU-Bindemittel olefinisch ungesättigte Doppelbindungen enthält. Zur Vernetzung wird der Polyurethandispersion ein niedermolekularer Photoinitiator zugegeben, der in der Dispersion verrührt wird.

Die DE-A1 39 11 827 beschreibt ebenfalls wäßrige Polyurethandispersionen, wobei das PU-Bindemittel olefinisch ungesättigte Doppelbindungen enthält. Zur Vernetzung durch UV-Bestrahlung wird der Dispersion ein niedermolekularer Photoinitiator zugesetzt.

Ebenso betreffen die DE-A1 40 31 732 und die DE-A1 42 03 546 strahlungshärtbare PU-Bindemittel, wobei jeweils ein niedermolekularer Photoinitiator der wäßrigen Polyurethandispersion zugegeben wird.

Nachteilig wirkt sich bei allen offenbarten Verfahren aus, daß der Photoinitiator bzw. gegebenenfalls dessen Fragmentierungsteile nach der Vernetzung durch UV-Strahlung nicht diffusionsstabil in der Bindemittelmatrix eingebunden sind. Unter Umständen können diese niedermolekularen Bestandteile an die Beschichtungsoberfläche diffundieren. Solche Fragmentierungsprodukte verleihen der Beschichtung oftmals einen unangenehmen Geruch. Unter Umständen können die Fragmentierungsprodukte sogar toxisch sein. Ebenfalls nachteilig wirkt sich die weichmachende Wirkung solcher niedermolekularen Zusätze auf die mechanischen Eigenschaften der Beschichtung aus.

Ein weiterer gravierender Nachteil, der sich aus der Zumischung niedermolekularer Photoinitiatoren zur Vernetzung der olefinisch ungesättigte Doppelbindungen enthaltenden Polyurethane ergibt, besteht in der mangelnden Recyclierbarkeit der Beschichtungsmittel, beispielsweise durch das immer häufiger angewandte Verfahren der Ultrafiltration.

Bei diesem Verfahren wird der sogenannte 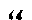 *Overspray* 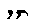 mittels Wasser aus der Abluft einer Spritzkabine ausgewaschen und das auf diese Weise mit Beschichtungsmittel angereicherte Wasser so lange einer Ultrafiltration unterzogen, bis die Zusammensetzung der wäßrigen Dispersion wieder der ursprünglich eingesetzten Beschichtungsmittelzusammensetzung entspricht.

Bei diesem Verfahren werden jedoch alle Bestandteile der ursprünglichen Beschichtungsmittelzusammensetzung, die ein bestimmtes Molekulargewicht unterschreiten, im Umlaufwasser angereichert und damit der Beschichtungsmittelzusammensetzung entzogen. Hiervon sind auch die bislang eingesetzten, niedermolekularen Photoinitiatoren betroffen. Durch die damit verbundene kontinuierliche Abnahme der Konzentration an niedermolekularem Photoinitiator in der Beschichtungsmittelzusammensetzung ergibt sich für die aufgetragene Beschichtung mit zunehmender Laufzeit der Ultrafiltration eine deutlich verringerte Reaktivität bei der Vernetzung durch Bestrahlung. Diesem Verlust an Reaktivität kann in der Regel nur durch Nachdosieren des Photoinitiators begegnet werden.

Die aus dem Stand der Technik bekannten, durch Strahlung härtbaren Beschichtungsmittelzusammensetzungen auf Polyurethanbasis können daher die gestiegenen anwendungstechnischen Erfordernisse nicht oder nur unzureichend erfüllen.

Aus dem Stand der Technik sind auch Polyurethane bekannt, die Photoinitiatoren als kovalent an die Polyurethankette gebundenen Bestandteil enthalten können.

Die WO 96/08524 offenbart zwar in Seitenketten funktionalisierte, wäßrige Polyurethandispersionen, die als Funktionalisierung Photoinitiatoren enthalten können, es werden jedoch keine zum Einbau in das Polyurethan geeigneten Photoinitiatoren offenbart. Außerdem erfolgt die Funktionalisierung über Carbodiimidgruppen, was eine aufwendige Synthese vor dem Einbau in das Polyurethan erfordert.

Die DE-A1 37 38 567 offenbart ein Polyurethangemisch, bei dem ein zur Reaktion mit Polyurethanen befähigter Photoinitiator vor der thermischen Polyadditionsreaktion der Polyisocyanate zugegeben wird. Es werden jedoch keine wäßrigen PU-Bindemittel beschrieben, und die Bestrahlung des Systems erfolgt vor der thermischen Nachhärtung.

Es sind daher aus dem Stand der Technik keine wasserlöslichen oder wasserdispergierbaren Polyurethanbindemittel bekannt, die kovalent gebundene Photoinitiatoren enthalten und auf einfache Weise mit bekannten Methoden zur Polyurethansynthese hergestellt werden können.

Es war daher eine Aufgabe der vorliegenden Erfindung, PU-Bindemittel zur Verfügung zu stellen, die Photoinitiatoren kovalent im Bindemittel eingebaut enthalten. Die PU-Bindemittel sollen aus wäßrigen Lösungen oder Dispersionen alleine durch thermische Trocknung zu klebfreien, mechanisch stabilen Überzügen und Beschichtungen führen und zu einem beliebigen späteren Zeitpunkt photochemisch durch Bestrahlung vernetzbar sein.

Gegenstand der Erfindung ist daher ein in Wasser im wesentlichen selbstdispergierbares Polyurethan mit einem Zahlenmittel des Molekulargewichts Mₙ von größer als 2700, erhältlich durch Umsetzung von
a) mindestens einem Polyisocyanat mit
b) mindestens einem Polyol, bestehend aus
   b1) 9 bis 100 mol-% eines Polyols oder eines Gemischs aus mehreren Polyolen mit einem Molekulargewicht von mindestens 500 und
   b2) 0 bis 91 mol-% eines Polyols oder eines Gemischs aus mehreren Polyolen mit einem Molekulargewicht von weniger als 500,
   wobei b1) und b2) zusammen 100 mol-% der Komponente b) ergeben, und
c) mindestens einem Photoinitiator der allgemeinen Formel I 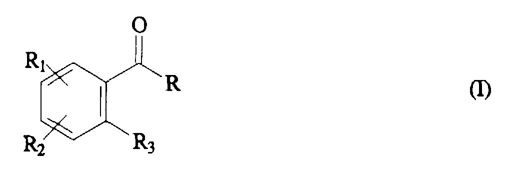 wobei R für einen Rest der Formel II 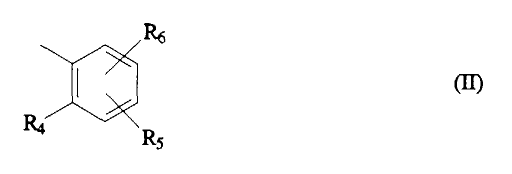 oder für -CR⁷R⁸R⁹, P(=O)(R¹⁰)₂ oder SO₂R¹¹ steht
   und mindestens einer der Reste R¹, R², R⁵, R⁶ und R⁹ dem Einbau in das Polyurethan dient
   und die verbleibenden Reste R¹, R², R⁵, R⁶ und/oder R⁹ für Wasserstoff, C₁₋₁₂-Alkyl, C₁₋₁₂-Alkoxy, Halogen, Cyano, Nitro und/oder Sulfo stehen,
   R³ und R⁴ jeweils unabhängig voneinander für Wasserstoff oder COOH oder zusammen für S stehen,
   R⁷ und R⁸ jeweils unabhängig voneinander für Wasserstoff, C₁₋₁₂-Alkyl, C₁₋₁₂-Alkenyl, C₁₋₁₂-Alkoxy, Phenyl oder zusammen für =O oder C₂₋₆-Alkylen stehen,
   R⁹ für OR¹¹, N(R¹¹)₂, N-Piperidyl, N-Piperazyl oder N-Morpholino steht,
   R¹⁰ für C₁₋₁₂-Alkyl, C₁₋₁₂-Alkanoyl, Phenyl oder Benzoyl, die jeweils wiederum mit Halogen, C₁₋₁₂-Alkyl oder C₁₋₁₂-Alkoxy substituiert sein können, steht,
   R¹¹, gegebenenfalls jeweils unabhängig voneinander, für Wasserstoff oder gegebenenfalls mit OH, NHR¹⁰, NH₂ oder SH substituiertes C₁₋₆-Alkyl, C₁₋₁₂-Alkoxy, Phenyl oder zusammen für C₂₋₅-Alkylen stehen, wobei, wenn R⁹ für OR¹¹ steht und R¹¹ für Wasserstoff steht, R⁷ und R⁸ in Kombination nicht für Wasserstoff und Phenyl stehen dürfen.

Gegebenenfalls können bei der Umsetzung noch eine oder mehrere der folgenden Komponenten anwesend sein:
d) ein Polyamin oder ein Gemisch aus mehreren Polyaminen
e) eine Verbindung oder ein Gemisch aus mehreren Verbindungen mit mindestens einer gegenüber Isocyanaten reaktionsfähigen Gruppe und mindestens einer durch Basen- oder Säurezugabe oder durch Quaternisierung ionisierbaren Gruppe,
f) eine Verbindung oder ein Gemisch aus mehreren Verbindungen mit mindestens einer gegenüber Isocyanaten reaktionsfähigen Gruppe und mindestens einer olefinisch ungesättigten Doppelbindung.

Unter *"in Wasser im wesentlichen selbstdipergierbares Polyurethan"* wird im erfindungsgemäßen Sinne ein Polyurethan verstanden, das durch lediglich geringen Zusatz oder sogar ganz ohne Zusatz von Dispergierhilfen in Wasser stabil dispergierbar ist. Die erfindungsgemäßen Polyurethane erfordern höchstens einen Zusatz von Dispergierhilfen in einer Größenordnung von etwa 5 Gew.-%, bevorzugt weniger als 3 Gew.-% und insbesondere bevorzugt weniger als 1 Gew.-% bezogen auf die Trockenmasse der Dispersion und insbesondere bezogen auf die Masse der PU-Bindemittel in der Dispersion.

Der Begriff *"Trocknung"* bezieht sich im Rahmen der vorliegenden Erfindung auf die Reduzierung des Lösemittelgehalts der Beschichtung bis zum Erreichen einer klebfreien, mechanisch stabilen Oberfläche, wobei unter *"Lösemittel"* sowohl organische Lösemittel wie auch Wasser als kontinuierliche Phase verstanden werden.

Organische Lösemittel können in den erfindungsgemäßen Polyurethandispersionen in untergeordneten Mengen vorhanden sein, beispielsweise in einer Menge von maximal etwa 10 Gew.-%, bevorzugt weniger als etwa 7 Gew.-% und besonders bevorzugt weniger als etwa 5 Gew.-%, bezogen auf die gesamte Dispersion.

Als Komponente a) zur Herstellung der erfindungsgemäßen Polyurethane kommen die üblicherweise in der Polyurethanchemie eingesetzten Polyisocyanate in Betracht.

Insbesondere zu nennen sind Diisocyanate X(NCO)₂, wobei X für einen aliphatischen Kohlenwasserstoffrest mit vier bis zwölf Kohlenstoffatomen, einen cycloaliphatischen oder aromatischen Kohlenwasserstoffrest mit sechs bis fünfzehn Kohlenstoffatomen oder einen araliphatischen Kohlenwasserstoffrest mit sieben bis fünfzehn Kohlenstoffatomen steht. Beispiele derartiger Diisocyanate sind Tetramethylendiisocyanat, Hexamethylendiisocyanat (HDI), Dodecamethylendiisocyanat, 1,4-Diisocyanatocyclohexan, 1-Isocyanato-3,3,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, Tetramethylxylylendiisocyanat (TMXDI), 2,4'-Diisocyanato-dipenylmethan, p-Xylylendiisocyanat, die Isomeren des Bis-(4-isocyanatocyclohexyl)methans wie das trans/trans-, das cis/cis- und das cis/trans-Isomere sowie aus diesen Verbindungen bestehende Gemische

Als Gemische dieser Isocyanate sind besonders die Gemische der jeweiligen Strukturisomeren von Diisocyanatotoluol und Diisocyanatodiphenylmethan von Bedeutung, insbesondere ist das Gemisch aus 80 mol-% 2,4-Diisocyanatotoluol und 20 mol-% 2,6-Diisocyanatotoluol geeignet. Weiterhin sind die Gemische von aromatischen Isocyanaten, wie 2,4-Diisocyanatotoluol und/oder 2,6-Diisocyanatotoluol mit aliphatischen oder cycloaliphatischen Isocyanaten, wie HDI oder IPDI, besonders vorteilhaft, wobei das bevorzugte Mischungsverhältnis von aliphatischen zu aromatischen Isocyanaten etwa 4 : 1 bis 1 : 4 beträgt.

Als Komponente a) können auch Isocyanate eingesetzt werden, die neben den freien Isocyanatgruppen weitere verkappte Isocyanatgruppen, z.B. Urethangruppen, tragen.

Gegebenenfalls können auch solche Isocyanate mitverwendet werden, die nur eine Isocyanatgruppe tragen. Im allgemeinen beträgt deren Anteil maximal 10 mol-%, bezogen auf die gesamte Molmenge der Monomeren. Die Monoisocyanate tragen gegebenenfalls weitere funktionelle Gruppen, wie olefinisch ungesättigte Gruppen oder Carbonylgruppen und dienen dann zur Einführung dieser funktionellen Gruppen in das Polyurethan. Sie können die Dispergierung bzw. Vernetzung oder weitere polymeranaloge Umsetzungen des Polyurethans verbessern oder sogar erst ermöglichen. In Betracht kommen hierfür beispielsweise Verbindungen wie Isopropenyl-α,α-dimethylbenzylisocyanat (TMI).

Um Polyurethane mit einem gewissen Verzweigungs- oder Vernetzungsgrad herzustellen, können z.B. drei- und/oder höherwertige Isocyanate eingesetzt werden. Derartige Isocyanate werden z. B. erhalten, indem man zweiwertige Isocyanate derart miteinander umsetzt, daß ein Teil ihrer Isocyanatgruppen zu Allophanat-, Biuret- oder Isocyanuratgruppen derivatisiert wird. Handelsübliche Verbindungen sind beispielsweise das Isocyanurat oder das Biuret des Hexamethylendiisocyanats.

Weitere geeignete höherfunktionelle Polyisocyanate sind z.B. Urethangruppen aufweisende Polyisocyanate auf Basis von 2,4- und/oder 2,6 Diisocyanatotoluol, IPDI, Tetramethylen- oder Hexamethylendiisocyanat einerseits und niedermolekularen Polyhydroxyverbindungen wie Trimethylolpropan andererseits.

Im Hinblick auf die Verarbeitbarkeit der Polyurethane sollte der Anteil an tri- oder höherfunktionellen Polyisocyanaten beschränkt sein. So sollte ihr Anteil auf etwa 50 Gew.-%, bevorzugt weniger als etwa 35 Gew.-% und besonders bevorzugt weniger als etwa 25 Gew.-%, beschränkt sein.

Als Komponente b) kommen höhermolekulare Polyole, bevorzugt Diole, in Betracht, die ein Molekulargewicht von mehr als 500, beispielsweise etwa 500 bis 5.000, vorzugsweise von etwa 1.000 bis etwa 3.000 g/mol, haben. Diese Polyole werden im weiteren Verlauf mit b1) bezeichnet und sind vornehmlich für gute Filmbildung und Elastizität verantwortlich.

Bei den Polyolen der Komponente b1) handelt es sich insbesondere um Polyesterpolyole, die z.B. aus Ullmanns *Encyklopädie der technischen Chemie*, 4. Aufl., Bd. 19, S. 62-65, bekannt sind. Bevorzugt werden Polyesterpolyole eingesetzt, die durch Umsetzung von zweiwertigen Alkoholen mit Polycarbonsäuren (bevorzugt zweiwertigen Carbonsäuren) erhalten werden. Anstelle der freien Polycarbonsäuren können auch die entsprechenden Polycarbonsäureanhydride oder entsprechenden Polycarbonsäureester von niederen Alkoholen oder deren Gemische zur Herstellung der Polyesterpolyole verwendet werden. Die Polycarbonsäuren, ihre Ester und Anhydride werden im folgenden auch als Komponente b1.1) bezeichnet. Die Polycarbonsäuren können aliphatisch, cycloaliphatisch, araliphatisch, aromatisch oder heterocyclisch sein und gegebenenfalls z.B. durch Halogenatome substituiert und/oder ungesättigt sein. Als Beispiele hierfür seien genannt Korksäure, Azelainsäure, Phthalsäure, Isophthalsäure, Terephthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure oder dimere Fettsäuren. Die hier genannten Polycarbonsäuren können entweder als ausschließliche Säurekomponente oder im Gemisch untereinander zum Aufbau der Komponente b1) eingesetzt werden. Bevorzugt sind die Carbonsäuren der allgemeinen Formel HOOC-(CH₂)_{y}-COOH, wobei y eine Zahl von 1 bis 20, bevorzugt eine Zahl von 2 bis 20, ist, z.B. Bernsteinsäure, Adipinsäure, Dodecandicarbonsäure oder Sebacinsäure. Anstelle der freien Polycarbonsäuren können, soweit möglich, als Komponente b1.1) auch die entsprechenden Polycarbonsäureanhydride oder entsprechenden Polycarbonsäureester von niederen Alkoholen oder deren Gemische zur Herstellung der Polyesterpolyole verwendet werden.

Als mehrwertige, bevorzugt zweiwertige, Alkohole zur Reaktion mit der Polycarbonsäurekomponente zum Aufbau der Komponente b1) kommen als Komponente b1.2) z.B. Ethylenglycol, Propan-1,2-diol, Propan-1,3-diol, Butan-1,3-diol, Buten-1,4-diol, Butin-1,4-diol, Pentan-1,5-diol, Hexan-1,6-diol, Neopentylglycol, Bis-(hydroxymethyl)cyclohexane, wie 1,4-Bis(hydroxymethyl)cyclohexan, 2-Methyl-propan-1,3-diol, Methylpentandiole, ferner Diethylenglycol, Triethylenglycol, Tetraethylenglycol, Polyethylenglycol, Dipropylenglycol, Polypropylenglycole, Dibutylenglycol und Polybutylenglycole in Betracht. Bevorzugt sind Neopentylglycol und Alkohole der allgemeinen Formel HO-(CH₂)ₓ-OH, wobei x eine Zahl von 1 bis 20, bevorzugt eine Zahl von 2 bis 20, ist. Beispiele hierfür sind Ethylenglycol, Butan-1,4-diol, Hexan-1,6-diol, Octan-1,8-diol und Dodecan-1,12-diol.

Ferner kommen auch Polycarbonatdiole, wie sie z. B. durch Umsetzung von Phosgen mit einem Überschuß von den als Aufbaukomponenten für die Polyesterpolyole genannten niedermolekularen Alkohole (Komponente b1.2)) erhalten werden können, in Betracht.

Geeignet sind als Komponente b1) auch Polyesterdiole auf Lacton-Basis, wobei es sich um Homo- oder Mischpolymerisate von Lactoren, bevorzugt um endstäridige Hydroxylgruppen aufweisende Anlagerungsprodukte von Lactonen an geeignete difunktionelle Startermoleküle handelt. Es kommen bevorzugt solche Lactone in Betracht, die sich von Verbindungen der allgemeinen Formel HO-(CH₂)_{z}-COOH ableiten, wobei z eine Zahl von 1 bis 20 ist. Beispiele sind ε-Caprolacton, β-Propiolacton, γ-Butyrolacton und/oder Methyl-ε-caprolacton sowie deren Gemische. Geeignete Starterkomponenten sind z.B. die vorstehend aus Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lactonpolymerisate eingesetzt werden. Anstelle der Polymerisate von Lactonen können auch die entsprechenden chemisch äquivalenten Polykondensate der den Lactonen entsprechenden Hydroxycarbonsäuren eingesetzt werden.

Die Polyesterpolyole können auch aus untergeordneten Mengen an mono- und/oder höherfunktionellen Monomeren aufgebaut sein.

Daneben kommen als Monomere b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Wasser, Alkohole oder Amine, z.B. Ethylenglycol, Propan-1,2-diol, Propan-1,3-diol, 2,2-Bis(4-hydroxydiphenyl)-propan oder Anilin, erhältlich. Besonders bevorzugt ist Polytetrahydrofuran mit einem Molekulargewicht von etwa 500 bis etwa 4.000, bevorzugt etwa 500 bis etwa 3.000.

Sowohl bei der Herstellung der Polyesterpolyole wie auch bei der Herstellung der Polyetherpolyole können Alkohole mit einer Funktionalität von mehr als zwei in untergeordneten Mengen als Komponente b1.3) eingesetzt werden. Insbesondere sind dies Verbindungen wie beispielsweise Trimethylolpropan, Pentaerythrit, Glycerin, Zucker, wie beispielsweise Glucose, oligomerisierte Polyole wie beispielsweise di- oder trimere Ether von Trimethylolpropan, Glycerin oder Pentaerythrit. Die vorstehenden Verbindungen sind ebenfalls als Starterkomponente zum Aufbau der Polyetherpolyole geeignet.

Vorzugsweise werden die Polyolverbindungen mit einer Funktionalität > 2 nur in untergeordneten Mengen zum Aufbau der Polyesterpolyole bzw. Polyetherpolyole herangezogen.

Ebenfalls als Komponente b1) geeignet sind Polyhydroxyolefine, bevorzugt solche mit zwei endständigen Hydroxylgruppen, z.B. α,ω-Dihydroxypolybutadien, α,ω-Dihydroxypolymethacrylester oder α,ω-Dihydroxypolyacrylester.

Die unter Komponente b1) aufgezählten Polyole können auch als Gemische aus zwei oder mehr davon in beliebigen Verhältnissen eingesetzt werden.

Die Härte und das Elastizitätsmodul der Polyurethane lassen sich in der Regel noch erhöhen, wenn als Polyole b2) neben den Polyolen b1) noch niedermolekulare Di- oder Polyole, vorzugsweise Diole, b2) mit einem Molekulargewicht von weniger als etwa 500, vorzugsweise 62 bis etwa 500 und besonders bevorzugt 62 bis etwa 200 g/mol eingesetzt werden.

Als Komponente b2) werden vor allem die als Komponente b1.2) bezeichneten kurzkettigen Alkandiole eingesetzt, wobei Neopentylglycol und die unverzweigten Diole mit 2 bis 12 C-Atomen und einer geradzahligen Anzahl von C-Atomen, wie beispielsweise Ethylenglycol, Butandiol-1,4 oder Hexandiol-1,6 bevorzugt. Gegebenenfalls kann die Komponente b2) in untergeordneten Mengen auch gegenüber Isocyanaten höherfunktionelle Alkohole, wie sie beispielsweise als Komponente b1.3) beschrieben sind, beinhalten.

Die zum Aufbau der erfindungsgemäßen Polyurethane beschriebenen Komponenten b1) und b2) können auch als Mischungen von b1) und b2) im Sinne der Erfindung eingesetzt werden. Hierbei beträgt der Anteil der Polyole b1), bezogen auf die Gesamtmenge der Polyole b1) plus b2), 9 bis 100 mol-% und der Anteil der Polyole b2), bezogen auf die Gesamtmenge der Polyole b1) plus b2), 0 bis 91 mol-%. Besonders bevorzugt beträgt das Verhältnis der Polyole b2) zu den Polyolen b1) 10 : 1 bis 0 : 1, besonders bevorzugt 8 : 1 bis 0 : 1.

Als Komponente c) werden zur Herstellung des erfindungsgemäßen Polyurethans Photoinitiatoren der allgemeinen Formel I eingesetzt 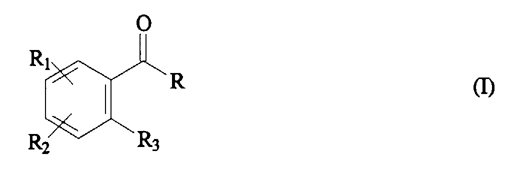 wobei die Bedeutung der Reste weiter oben bereits erläutert wurde.

Die Verbindungen der allgemeinen Formel I tragen mindestens eine funktionelle Gruppe, die gegebenenfalls nach Derivatisierung dem Einbau des Photoinitiators in das Polyurethan dient. Alle funktionellen Gruppen, die einen solchen Einbau ermöglichen, sind im Rahmen der vorliegenden Erfindung einsetzbar. Insbesondere handelt es sich dabei entweder um Isocyanatgruppen oder um funktionelle Gruppen, die ein acides Wasserstoffatom tragen, das durch den Zerewittinoff-Test bestimmbar ist, wie beispielsweise Hydroxylgruppen, Mercaptangruppen, primäre oder sekundäre Aminogruppen oder Carboxylgruppen.

Die Reste R¹, R², R⁵, R⁶ und/oder R⁹ können neben den oben genannten funktionellen Gruppen auch Reste der Struktur A-X bedeuten, wobei X eine funktionelle Gruppe ist, die dem Einbau in das Polyurethan dient, und A ein C₁₋₁₂-Alkyl- oder Alkanoyl-, Aryl- oder Aryloxyrest ist.

Komponenten c) der Formel I enthalten von 1 bis 4, bevorzugt von 1 bis 3, besonders bevorzugt 1 oder 2 Reste R¹, R², R⁵, R⁶ oder R⁹, die eine funktionelle Gruppe aufweisen, die dem Einbau in das Polyurethan dienen.

Steht R für einen gegebenenfalls mit den Resten R⁴, R⁵ und R⁶ substituierten Phenylring, so ergeben sich Photoinitiatoren der Benzophenonreihe. Bilden dann in diesem Fall die Reste R³ und R⁴ zusammen eine Sulfidbrücke zwischen den Phenylringen, so resultieren daraus sogenannte Thioxanthon-Photoinitiatoren.

Steht R für die Gruppierung -CR⁷R⁸R⁹, so ergeben sich gemäß den oben angegebenen Definitionen für R⁷, R⁸ und R⁹ die Photoinitiatorengrundstrukturen der Benzoin- und Acyloinether, der Benzilketale und Dialkoxyacetophenone, der Hydroxy- und Aminoalkylphenone sowie der α-Sulfonylketone.

Steht R für die Gruppen -C(=O)R⁹, so ergeben sich gemäß der oben angegebenen Definition für R⁹ die niedermolekularen Photoinitiatoren der Phenylglyoxalsäureester- oder -amidreihe.

Steht R für die Gruppe -P(=O)(R¹⁰)₂, so gehören die resultierenden Photoinitiatoren zu der Klasse der Acylphosphidoxide.

Folgende Verbindungen sind besonders zur Verwendung als Komponente c) in den erfindungsgemäßen Polyurethanen geeignet:
2-, 3- und 4-Hydroxybenzophenon, 2-Hydroxy-5-methylhydroxybenzophenon, 2-Hydroxy-4-methoxybenzophenon, 2-Hydroxy-4-octyloxybenzophenon, 2-Hydroxy-4-dodecyloxybenzophenon, 2-Hydroxy-5-chlorohydroxybenzophenon, 2-Hydroxy-4-methoxy-4'-methylbenzophenon, 2-Hydroxy-4-methoxy-4'-chlorobenzophenon, 4-Hydroxy-3-methylbenzophenon, 4-Hydroxy-4'-methoxybenzophenon, 4-Hydroxy-4'-chlorobenzophenon, 4-Hydroxy-4'-fluorobenzophenon, 4-Hydroxy-4'-cyanobenzophenon, 4-Hydroxy-2',4'-dimethoxybenzophenon, 2,2',4,4'- und 2,4-Dihydroxybenzophenon, 4-tert.-Butyl-2,4-dihydroxybenzophenon, 2,2'-Dihydroxy-4-methoxybenzophenon, 2,2'-Dihydroxy-4-octoxybenzophenon, 2,2'-Dihydroxy-4,4'-dimethoxybenzophenon, 2,4,4'-, 2,3,4- und 2,4,6-Trihydroxybenzophenon, 2,2,'-, 4,4'-, 2,3,4,4'- und 2,3',4,4'-Tetrahydroxybenzophenon, 2-, 3- und 4-Aminobenzophenon, 2-Amino-4-methylbenzophenon, 2-Amino-6-methylbenzophenon, 2-Amino-4'-methylbenzophenon, 2-Amino-4'-chloro-5-fluorobenzophenon, 2-Amino-5-chlorobenzophenon, 2-Amino-5-bromobenzophenon, 2-Amino-5-methylbenzonon, 2-Amino-N-ethylbenzophenon, 2-Amino-2',5'-dimethylbenzophenon, 4-Amino-2-chlorobenzophenon, 4-Amino-4'-methoxybenzophenon, 3,4-, 4,4'- und 3,3'-Diaminobenzophenon, 4,4'-Bis(methylamino)benzophenon, 3,3',4,4'-Tetraaminobenzophenon, 2-, 3- und 4-Benzoylbenzoesäure, 2-Benzoyl-3'-methylbenzoesäure, 2-Benzoyl-4'-Ethylbenzoesäure, 2-Benzoyl-3,6-dimethylbenzoesäure, 2-Benzoyl-2',6'-dimethylbenzoesäure, 2-Benzoyl-3',4'-dimethylbenzoesäure, 2-Benzoyl-2',4',6-dimethylbenzoesäure, 2-Benzoyl-p-hydroxybenzoesäure, 2-Benzoyl-4'-methyl-3'-chlorobenzoesäure, 2-Benzoyl-6-chlorobenzoesäure, 4-Benzoyl-4'-isopropylbenzoesäure, 4-Benzoyl-4'-chlorobenzoesäure, 4-Benzoyl-4'-(2-carboxypropyl)benzoesäure, 2,4-, 3,4- und 4,4'-Benzophenondicarbonsäure, 2',3,4-, 3,3',4- und 3,4,4'-Benzophenontricarbonsäure, 3,3',4,4'-Benzophenontetracarbonsäure und -tetracarbonsäuredianhydrid, 2-Hydroxy-4-methoxy-5-sulfobenzophenon, 4-(4-Carboxyphenyloxy)benzophenon, 4-(3,4-Bis(carboxy)-phenyloxy)benzophenon und das entsprechende Anhydrid, 4'-(4-Carboxyphenyloxy)-benzophenon-4-carbonsäure, 4'-(4-Carboxyphenyloxy)benzophenon-3,4-dicarbonsäure und das entsprechende Anhydrid, 4'-(3,4-Bis(carboxy)-phenyloxy)-benzophenon-2,4- und -3,4-dicarbonsäure und die entsprechenden Anhydride, 4-(4-Cyanobenzoyl)-thiophenol, 4-(2-Hydroxyethoxy)phenyl-(2-hydroxy-2-propyl)keton, 4-(2-Aminoethoxy)phenyl-(2-hydroxy-2-propyl)keton, 4-(2-Hydroxycarbonylmethoxy)phenyl-(2-hydroxy-2-propyl)keton, 4-(2-Isocyanatoethoxy)phenyl-(2-hydroxy-2-propyl)keton, 4-(2-Isocyanatomethoxy)phenyl-(2-hydroxy-2-propyl)keton, 2-([2-]6-Isocyanatohexylaminocarbonyloxy)ethoxylthioxanthon, Phenylglyoxylsäure, Ester der Phenylglyoxylsäure mit Polyolen, wobei die brauchbaren Polyole im wesentlichen die unter b1.2) und b1.3) beschriebenen, für die Polyurethansynthese verwendeten Polyole sind, Amide der Phenylglyoxylsäure mit Aminoalkoholen, wobei als Aminoalkohole Monoaminopolyole mit zwei aliphatisch gebundenden Hydroxylgruppen, wie sie innerhalb der vorliegenden Anmeldung im Rahmen der Polyurethansynthese unter Komponente d) beschrieben werden, eingesetzt werden können. Ebenfalls zur Herstellung der Amide der Phenylglyoxylsäure geeignete Monoaminopolyole mit mehr als zwei aliphatisch gebundenen Hydroxylgruppen sind beispielsweise Tris(hydroxymethyl)methylamin, 2-[Tris-(hydroxymethyl)-methylamino]-ethansulfonsäure, 3-[Tris-(hydroxymethyl)-methylamino]-propansulfonsäure, N-Tris-(hydroxymethyl)-methyl]-glycin, Tris-(3-hydroxypropyl)-methylamin, Glucamin und N-(2-Hydroxyethyl)-glucamin oder die Aminodiole, wie N,N'-Bis-(2-hydroxyethyl)-ethylendiamin, Umsetzungsprodukte aus einem primären Polyetherdiamin und pro Mol Polyetherdiamin 2 mol Ethylen-, Propylen- und/oder Butylenoxid, wobei die Bedingungen für die Umsetzung des Polyetherdiamins mit dem Alkylenoxid so ausgewählt werden sollen, daß selektiv das N,N'-Bis(hydroxyalkylamin)-Derivat mit zwei sekundären Aminogruppen entsteht. Beispiele für die Polyetherdiamine sind z.B. 4,7-Dioxadecan-1,10-diamin, 4,11-Dioxytetradecan-1,14-diamin, α-(2-Aminomethyl-ethyl)-ω-(2-aminomethyl-ethoxy)-poly[oxy(methyl-1,2-ethandiyl)] mit einem Molekulargewicht von etwa 200 bis etwa 3.000, und α-(3-Aminopropyl)-ω-(3-aminopropoxy)-poly[oxy(1,4-butandiyl)] mit einem Molekulargewicht von etwa 300 bis etwa 3.000.

Ebenfalls zur Umsetzung mit Phenylglyoxylsäure unter Bildung der entsprechenden Amide geeignet sind Monoaminopolyole mit nur einer aliphatisch gebundenen Hydroxylgruppe, wie sie unter Komponente d) beschrieben werden.

Zum Einbau von Struktureinheiten der Komponente c) mit der Formel I in das erfindungsgemäße Polyurethan bestehen verschiedene Möglichkeiten. Wenn die Verbindung der Komponente c) als funktionelle Gruppe oder als funktionelle Gruppen Amino-, Thiol- oder aromatisch gebundene Carbonsäuregruppen tragen, läßt sich beispielsweise eine Addition an Isocyanatgruppen durchführen. Dies bedeutet, daß die Komponente c) entweder an ein Prepolymer mit endständigen, freien Isocyanatgruppen angelagert wird oder als reaktive Komponente bei der Polyaddition zur Herstellung des Polyurethans im Reaktionsgemisch anwesend ist. Eine nachträgliche Addition an ein Prepolymer mit freien Isocyanatgruppen kann vor, während oder nach der Wasserzugabe zum Isocyanatgruppen aufweisenden Prepolymeren geschehen. Dabei entstehen Harnstoff-, Thiourethan- oder Amidbindungen.

Dieselben Voraussetzungen gelten, wenn als funktionelle Gruppe oder als funktionelle Gruppen eine oder mehrere Hydroxylgruppe/n am Photoinitiator vorhanden ist/sind. Hier wird ebenfalls eine Addition an vorhandene freie Isocyanatgruppen durchgeführt.

Stellen die funktionellen Gruppen Isocyanatgruppen dar, so können die Verbindungen der Komponente c) bei der Prepolymersynthese zusammen mit der Komponente a) mit den weiteren, zum Aufbau des erfindungsgemäßen Polyurethans notwendigen oder gewünschten Komponenten b1), b2), d), e) oder f) zur Reaktion gebracht werden, wobei, z.B. durch Reaktion mit Hydroxylgruppen aus einer Polyolkomponente, Urethangruppen entstehen.

Die Addition der Isocyanatgruppen enthaltenden Verbindungen der Komponente c) kann auch nachträglich vor, während oder nach der Wasserzugabe von Isocyanatgruppen aufweisenden Prepolymeren erfolgen. Durch die weitere Reaktion der Isocyanatgruppen mit Wasser oder mit einem zugesetzten Di- oder Polyamin bauen sich die Verbindungen der Komponente c) durch Harnstoffgruppenbildung in das Polyurethan in bekannter Weise ein.

Weisen die Verbindungen der Komponente c) aromatisch gebundene Hydroxylgruppen als funktionelle Gruppen auf, so werden vor der Umsetzung mit Isocyanatgruppen bevorzugt Alkylenoxide, wie Ethylen-, Propylen- oder Butylenoxide, an die Hydroxylgruppe addiert. Die Addition soll insbesondere so vollständig verlaufen, daß nach der Umsetzung keine aromatisch gebundenen, sondern nur noch aliphatisch gebundene Hydroxylgruppen vorliegen.

Die Verbindungen der Komponente c) können vor dem Einbau in das Polyurethan, insofern sie Hydroxylgruppen aufweisen, mit Polycarbonsäuren, Phosgen, Phosgenanalogen oder Caprolactonen zu Polyester-, Polycarbonat- oder Polycaprolactonpolyolen nach bekannten Methoden umgesetzt werden und als solche durch Reaktion mit freien Polyisocyanaten in das Polyurethan eingebaut werden.

Verbindungen der Komponente c), die als funktionelle Gruppen Carboxylgruppen tragen, können zur Herstellung von Hydroxylgruppen aufweisenden Polyestern nach bekannten Methoden verwendet werden. Dies geschieht in der Regel durch Umsetzung mit Polyolen, wie sie schon im Rahmen der Beschreibung der Komponenten b1) und b2) erwähnt wurden.

Wenn die Verbindungen der Komponente c) als funktionelle Gruppen einen 2-Oxa-1,3-bis(oxo)-1,3-propandiyl-Rest tragen, dann wird vorzugsweise eine Umsetzung der Struktureinheiten der Formel I mit Polyolen unter ringöffnender Halbester-Bildung durchgeführt, wobei Carbonsäuregruppen tragende Polyole entstehen.

Insgesamt lassen sich die Hydroxylgruppen tragenden Verbindungen der Komponente c) durch eine Vielzahl von dem Fachmann bekannten Reaktionen, wie beispielsweise Veresterung mittels Carbonsäuren, Umsetzen mit Phosgen oder mit Caprolactonen, zu Polyolen umwandeln, die die gewünschte Photoinitiatoraktivität der Komponente c) beinhalten. Die so dargestellten Polyole lassen sich leicht weiter zu den erfindungsgemäßen Polyurethanen umsetzen, indem sie beispielsweise im Gemisch mit der Komponente b1) oder der Komponente b2) oder sogar anstelle von einer dieser Komponenten eingesetzt werden.

Die hier beschriebenen Photoinitiator-haltigen Polyole können auch in Abmischung untereinander zur Herstellung der erfindungsgemäßen Polyurethane herangezogen werden. Die Polyole weisen dabei ein durchschnittliches Molekulargewicht von etwa 240 bis etwa 5.000, bevorzugt von etwa 300 bis etwa 2.500 und besonders bevorzugt von etwa 1.000 bis etwa 2.000 g/mol auf. Die durchschnittliche Funktionalität beträgt von etwa 1 bis etwa 5, bevorzugt von etwa 1,5 bis etwa 3 und besonders bevorzugt von etwa 1,8 bis etwa 2,2.

Die Bedingungen für die Umsetzung der Verbindungen der Komponente c), wenn sie Amino-, Mercapto- und/oder Carboxyl- und Hydroxylgruppen tragen mit freien Polyisocyanaten oder freie Isocyanate tragenden Prepolymeren sollen so gewählt werden, daß im ausreagierten Polyurethan keine Amino-, Mercapto- oder aus dieser Umsetzung stammende Carboxyl- und/oder Hydroxylgruppen in einer Konzentration von mehr als 10% der eingesetzten Menge mehr vorhanden sind.

Falls die Verbindungen der Komponente c) mit einem Isocyanatgruppen aufweisenden Polyurethan-Prepolymeren zur Reaktion gebracht werden, können auch höherfunktionelle Verbindungen mit drei oder vier funktionellen Gruppen, insbesondere Amino- und/oder Mercaptogruppen, verwendet werden, wenn die Umsetzung während oder nach der Dispergierung des Polyurethan-Prepolymeren stattfindet.

Die Konzentration an Verbindungen der Komponente c), bezogen auf Festharz, beträgt zwischen 20 und 2.000, bevorzugt 50 bis 1.000 und besonders bevorzugt 100 bis 500 mmol/kg.

Wenn Verbindungen der Komponente c) mindestens eine gegenüber Isocyanaten reaktionsfähige Gruppe und zusätzlich mindestens eine Carboxyl- oder Sulfonsäuregruppe tragen, wobei die Carbonsäure- und/oder Sulfonsäuregruppe nicht dem Einbau in das Polyurethan dient, oder wenn unter Zuhilfenahme einer entsprechenden Verbindung der Komponente c) hergestellte Polyole, wie oben beschrieben, zur Herstellung der erfindungsgemäßen Polyurethane verwendet werden, dann tragen die entstehenden Polyurethane freie Carboxyl- oder Sulfonsäuregruppen. Es ist daher auch möglich, ohne die Verwendung von Komponenten e) ionisierbare Gruppen in das erfindungsgemäße Polyurethan einzuführen.

Als Komponente d) können beispielsweise Kettenverlängerungsmittel oder zur Einführung von Verzweigung geeignete, mehr als zweiwertige Verbindungen eingesetzt werden, die mindestens eine primäre oder sekundäre oder, insofern mehr als eine Aminogruppe pro Molekül vorhanden ist, auch primäre und sekundäre Aminogruppen gleichzeitig aufweisen können.

Neben den Aminogruppen können die Verbindungen der Komponente d) noch weitere funktionelle Gruppen, insbesondere gegenüber Isocyanaten reaktive Gruppen, aufweisen. Hierzu zahlen insbesondere die Hydroxylgruppen oder die Mercaptogruppen.

Zu den im Sinne der Erfindung als Komponente d) einsetzbaren Verbindungen zählen beispielsweise Monoaminopolyole mit einer aliphatisch gebundenen Hydroxylgruppe, wie Ethanolamin, N-Methylethanolamin, N-Ethylethanolamin, N-Butylethanolamin, N-Cyclohexylethanolamin, N-tert.-Butylethanolamin, Leucinol, Isoleucinol, Valinol, Prolinol, Hydroxyethylanilin, 2-(Hydroxymethyl)-piperidin, 3-(Hydroxymethyl)-piperidin, 2-(2-Hydroxyethyl)-piperidin, 2-Amino-2-phenylethanol, 2-Amino-1-phenylethanol, Ephedrin, p-Hydroxyephedrin, Norephedrin, Adrenalin, Noradrenalin, Serin, Isoserin, Phenylserin, 1,2-Diphenyl-2-amino-ethanol, 3-Amino-1-propanol, 2-Amino-1-propanol, 2-Amino-2-methyl-1-propanol, Isopropanolamin, N-Ethyl-isopropanolamin, 2-Amino-3-phenylpropanol, 4-Amino-1-butanol, 2-Amino-1-butanol, 2-Aminoisobutanol, Neopentanolamin, 2-Amino-1-pentanol, 5-Amino-1-pentanol, 2-Ethyl-2-butyl-5-aminopentanol, 6-Amino-1-hexanol, 2-Amino-1-hexanol, 2-(2-Aminoethoxy)-ethanol, 3-(Aminomethyl)-3,5,5-trimethylcyclohexanol, 2-Aminobenzylalkohol, 3-Aminobenzylalkohol, 3-Amino-5-methylbenzylalkohol und 2-Amino-3-methylbenzylalkohol.

Wenn der Einsatz von Komponente d) beispielsweise der Erzeugung von Kettenverzweigungen dienen sollen, so lassen sich z.B. Monoaminopolyole mit zwei aliphatisch gebundenen Hydroxylgruppen, wie 1-Amino-2,3-propandiol, 2-Amino-1,3-propandiol, 2-Amino-2-methyl-1,3-propandiol, 2-Amino-2-ethyl-1,3-propandiol, 2-Amino-1-phenyl-1,3-propandiol, Diethanolamin, Diisopropanolamin, 3-(2-Hydroxyethylamino)propanol und N-(3-Hydroxypropyl)-3-hydroxy-2,2-dimethyl-1-aminopropan einsetzen.

Ebenfalls möglich ist der Einsatz von Polyaminen als Komponente d). Hierzu zählen beispielsweise Verbindungen wie Hydrazin, Ethylendiamin, 1,2- und 1,3-Propylendiamin, Butylendiamine, Pentamethylendiamine, Hexamethylendiamine, wie beispielsweise das 1,6-Hexamethylendiamin, Alkylhexamethylendiamine, wie beispielsweise das 2,4-Dimethylhexamethylendiamin, allgemein Alkylendiamine mit bis zu etwa 44 C-Atomen, wobei auch cyclische oder polycyclische Alkylendiamine eingesetzt werden können, wie sie z.B. aus den Dimerisierungsprodukten ungesättigter Fettsäuren in bekannter Weise gewonnen werden können. Ebenfalls einsetzbar sind aromatische Diamine, wie beispielsweise 1,2-Phenylendiamin, 1,3-Phenylendiamin oder 1,4-Phenyldiamin. Im Sinne der Erfindung einsetzbare, höhere Amine sind beispielsweise Diethylentriamin, Triethylentetramin und Aminomethyldiaminooctan-1,8.

Um die Wasserdispergierbarkeit der Polyurethane zu erreichen, werden in die Polyurethane in der Regel hydrophilierende, nicht-ionische, anionische oder kationische bzw. in anionische oder kationische Gruppen umwandelbare Struktureinheiten eingebaut.

Unter 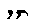 *in anionische oder kationische Gruppen umwandelbare Struktureinheiten* 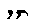 werden im Sinne der vorliegenden Erfindung solche Struktureinheiten verstanden, die durch eine einfache chemische Reaktion, wie beispielsweise Säurezugabe, Basenzugabe oder Quaternisierung mit z.B. Alkylhalogeniden, in eine ionische Form umgewandelt werden können. Beispiele hierfür sind Säuregruppen, tertiäre Amine oder Amide.

Neben den Komponenten a), b1), b2), c) und gegebenenfalls d) werden bei der Herstellung der erfindungsgemäßen Polyurethane, insofern die Wasserdispergierbarkeit nicht schon durch den Einbau geeigneter Polyetherketten im Rahmen des Einbaus der Komponenten b1) und/oder b2) gegeben ist, weitere hydrophile Komponenten e) eingebaut. Als Komponenten e) sind Verbindungen mit mindestens einer gegenüber Isocyanaten reaktionsfähigen Gruppe und mindestens einer durch Basen- oder Säurezugabe oder durch Quaternisierung ionisierbaren Gruppe oder einer schon durch eine solche Reaktion ionisierten Gruppe geeignet. Im folgenden Text werden die Begriffe 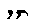 *anionische Gruppen* 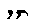 und 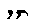 *kationische Gruppen* 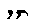 sowohl für die durch Säuren- oder Basenzugabe oder durch Quaternisierung ionisierten Gruppen als auch für die freien Säuren oder freien Basen synonym gebraucht, insofern keine anderslautenden Angaben gemacht sind.

Der Anteil der Komponente e) mit anionischen oder kationischen Gruppen an der Gesamtmenge der Komponenten a), b1), b2), c) und gegebenenfalls d) wird im allgemeinen so bemessen, daß die Molmenge der anionischen oder kationischen Gruppen, bezogen auf die Gewichtsmenge aller eingesetzten Komponenten, etwa 30 bis 1.000, bevorzugt etwa 50 bis 600 und besonders bevorzugt etwa 80 bis 500 mmol/kg beträgt. In jedem Fall ist der Anteil der Komponente e) jedoch so hoch, daß das entstehende Polyurethan in Wasser wenigstens weitgehend selbst dispergierbar ist.

Als Komponente e) werden vor allem Verbindungen in das Polyurethan eingebaut, die anionische Gruppen, wie die Sulfonat-, die Carboxylat- und/oder die Phosphonatgruppe, tragen. Dies geschieht entweder in Form der freien Säuren oder aber bevorzugt in Form ihrer Alkalimetall- oder Ammoniumsalze, wobei als Gegenionen Kationen, wie Ammoniumionen, insbesondere protonierte tertiäre Aminogruppen oder quartäre Ammoniumgruppen, möglich sind.

Potentielle ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder Aminogruppen, wobei unter den Aminogruppen die tertiären Aminogruppen bevorzugt sind.

Als Monomere mit anionischen Gruppen kommen üblicherweise aliphatische, cycloaliphatische, araliphatische oder aromatische Carbonsäuren oder Sulfonsäuren in Betracht, die mindestens eine alkoholischen Hydroxylgruppe oder mindestens eine primäre oder sekundäre Aminogruppe tragen. Bevorzugt sind die Hydroxyalkylcarbonsäuren, vor allem mit 3 bis 10 Kohlenstoffatomen, wie sie auch in der US-A 3,412,054 beschrieben sind. Besonders bevorzugt ist die Dimethylolpropionsäure (DMPA).

Weiterhin eignen sich als Komponente e) entsprechende Dihydroxysulfonsäuren und Dihydroxyphosphonsäuren oder basische Phosphine, wie Diethyl-β-hydroxyethyl-phosphin, Methyl-bis-β-hydroxyethyl-phosphin und Tris-β-hydroxymethyl-phosphin sowie Bis-(α-hydroxyisopropyl)-phosphinsäure, Hydroxyalkan-phosphinsäure und Phosphorsäure-bis-glycolester.

Ansonsten geeignet sind Hydroxylverbindungen mit einem Molekulargewicht von über 500 bis 10.000 g/mol mit mindestens zwei Carboxylatgruppen, wie sie beispielsweise aus der DE-A 3 911 827 bekannt sind. Sie sind durch Umsetzung von Dihydroxylverbindungen mit Tetracarbonsauredianhydriden, wie Pyromellithsäuredianhydrid oder Cyclopentantetracarbonsäuredianhydrid, im Molverhältnis 2 : 1 bis 1,05 : 1 in einer Polyadditionsreaktion erhältlich. Als Polyhydroxylverbindungen sind insbesondere die unter b1.2) und b1.3) aufgeführten niedermolekularen Di- und Polyole geeignet.

Als kationische Gruppen tragende Komponente e) sind vor allem Verbindungen mit tertiären Aminogruppen von besonderer praktischer Bedeutung, beispielsweise Tris-(hydroxyalkyl)-amine, N,N'-Bis(hydroxyalkyl)-alkylamine, N-Hydroxyalkyldialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus einem bis sechs Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisenden Aminen, z.B. Methylamin, Anilin oder N,N'-Dimethylhydrazin in an sich üblicher Weise zugänglich sind, in Betracht. Derartige Polyether weisen im allgemeinen ein zwischen 500 und 6.000 g/mol liegendes Molgewicht auf.

Diese tertiären Amine werden entweder mit Säuren, bevorzugt starken Mineralsäuren, wie Phosphorsäure, Schwefelsäure, Halogenwasserstoffsäuren, oder mit starken organischen Säuren, wie beispielsweise Ameisensäure oder Essigsäure, oder durch Umsetzung mit geeigneten Quaternisierungsmitteln, wie C₁₋₆-Alkylhalogeniden, z.B. Alkylbromiden oder -chloriden oder Benzylhalogeniden in die entsprechenden Aminoniumsalze überführt.

Die als Komponente e) eingesetzten Verbindungen können vor, während oder vorzugsweise nach der Isocyanat-Polyaddition in ihre ionische Form überführt werden, da sich die ionischen Monomeren in der Reaktionsmischung häufig nur schwer lösen.

Als Komponente f) können zur Herstellung des erfindungsgemäßen Polyurethans gegebenenfalls Verbindungen und mindestens einer gegenüber Isocyanaten reaktionsfähigen Gruppe und mindestens einer olefinisch ungesättigten Doppelbindung eingesetzt werden. Vorzugsweise ist die olefinisch ungesättigte Doppelbindung leicht einer radikalischen Polymerisation zugänglich, und besonders bevorzugt handelt es sich um eine durch aromatische Gruppen oder durch Carbonylgruppen aktivierte Doppelbindung, wie sie beispielsweise in Styrol oder in der Acrylsäure, der Methacrylsäure oder deren Estern vorkommt.

Im folgenden wird bei Bezugnahme auf Acrylsäure oder Methacrylsäure oder deren Derivate die Schreibweise 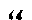 *(Meth)acrylsäure* 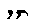 , wie beispielsweise 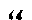 *Poly(meth)acrylsäure* 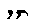 , benutzt.

Werden als Komponente f) Verbindungen mit lediglich einer Isocyanaten gegenüber reaktionsfähigen Gruppe eingesetzt, so werden die olefinisch ungesättigten Doppelbindungen am Ende der Polyurethankette eingebaut. Bei der Verwendung von zwei oder mehr gegenüber Isocyanaten reaktionsfähigen Gruppen aufweisenden und mindestens eine olefinisch ungesättigte Doppelbindung enthaltenden Verbindungen als Komponente f) erfolgt der Einbau bei entsprechender Reaktionsführung in der Regel in der Polyurethankette, obwohl auch hier ein Einbau am Kettenende möglich ist. Unter 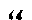 *Einbau in der Polyurethankette* 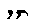 wird im erfindungsgemäßen Sinne sowohl der Einbau der Doppelbindung als Teil des Polymerrückgrats als auch eine Einführung der Doppelbindung in Form einer Seitenkette verstanden. Als geeignete, Hydroxylgruppen und mindestens eine olefinisch ungesättigte Doppelbindung enthaltende Monomere kommen beispielsweise Hydroxyalkyl(meth)acrylate, wie 2-Hydroxyethyl(meth)acrylat, Hydroxypropyl(meth)acrylate und 4-Hydroxybutyl(meth)acrylat, in Frage. Ebenfalls geeignet sind Polypropylenglycolmono(meth)acrylate und Polyethylenglycolmono(meth)acrylate. Zur Einführung von mehreren olefinisch ungesättigten Doppelbindungen sind die Polymethacrylate von mehrwertigen Alkoholen, wie Glycerindi(meth)acrylat, Trimethylolpropandi(meth)acrylat, Pentaerythrit-di- oder Pentaerythrit-tri(meth)acrylat, geeignet.

Unter Verwendung entsprechender Polyolkomponenten mit mindestens zwei Hydroxylgruppen können die olefinisch ungesättigten Doppelbindungen nicht nur an das Kettenende der Polyurethartkette, sondern auch als Seitenkette des Polymerrückgrats eingebaut werden. Hierzu sind beispielsweise Verbindungen wie Gylcerinmono(meth)acrylat, Trimethylolproanmono(meth)acrylat, Pentaerythrit-mono- oder Pentyerythrit-di(meth)acrylat geeignet. Ebenfalls zu diesem Zweck einsetzbar sind die Ringöffnungsprodukte von (Meth)acrylsäure mit Bis-Epoxiden wie beispielsweise den Glycidylethern von Bisphenol-A, Ethylenglycol, Butandiol-1,4 oder Hexandiol-1,6.

Gegebenenfalls können als Komponente f) auch oligomere oder polymere Verbindungen, die mindestens eine gegenüber Isocyanaten reaktionsfähige Gruppe und mindestens eine olefinisch ungesättigte Doppelbindung tragen, eingesetzt werden. Hierzu zählen beispielsweise Polyester, die unter Zuhilfenahme olefinisch ungesättigter Di- oder Polyole oder vorzugsweise unter Zuhilfenahme olefinisch ungesättigter Dicarbonsäuren oder Polycarbonsäuren hergestellt wurden. Bevorzugt ist die Verwendung solcher Polyester, die unter Verwendung der unter b1.1) und b1.2) beschriebenen Komponenten unter zumindest anteiligem Einsatz von ungesättigten Dicarbonsäuren, wie beispielsweise Maleinsäure, Maleinsäureanhydrid oder Fumarsäure, herstellbar sind.

Die im erfindungsgemäßen Polyurethan enthaltenen Säuregruppen werden vor oder bevorzugt nach dem Einbau in die Polyurethankette mit einem basischen Neutralisationsmittel neutralisiert. Als basische Neutralisationsmittel sind in der Regel beispielsweise Alkalimetalle, wie Li, Na oder K, sowie die Erdalkalimetalle, wie Ca, Mg, Ba oder Sr, geeignet, obwohl letztere im Rahmen der vorliegenden Erfindung nicht bevorzugt sind. Besser geeignet und im Rahmen der vorliegenden Erfindung bevorzugt sind alle Salze der o.g. Metalle, die in der Lage sind, unter Neutralisation der Säuregruppen zu reagieren, insbesondere die Carbonate oder die Hydroxide, wie beispielsweise LiOH, NaOH, KOH oder Ca(OH)₂. Unter den Letztgenannten ist NaOH besonders bevorzugt.

Ebenso zur Neutralisation geeignet und im Rahmen der vorliegenden Erfindung besonders bevorzugt sind organische, stickstoffhaltige Basen, wie beispielsweise Ammoniak, und Amine, wie Trimethylamin, Triethylamin, Tributylamin, Dimethylanilin, Dimethylethanolamin, Methyldiethanolamin oder Triethanolamin sowie deren Mischungen. Die Neutralisation mit den stickstoffhaltigen, organischen Basen kann in organischer oder in wäßriger Phase erfolgen. Mit stickstoffhaltigen Basen neutralisierte Verbindungen der Komponente e), wie nachfolgend beschrieben, eignen sich daher in der Regel auch in neutralisierter Form zum Einbau in das Polyurethan in organischer Lösung.

Wenn eine Neutralisation der Säuregruppen gewünscht wird, kann das Neutralisationsmittel in einer solchen Menge zugesetzt werden, daß ein ausreichender Teil der Säuregruppen, in der Regel etwa 0,1 bis 100%, neutralisiert wird.

Im erfindungsgemäßen Polyurethan enthaltene ionisierbare Gruppen, die zu anionischen oder kationischen Gruppen durch Basen- oder Säurezugabe oder durch Quaternisierung umwandelbar sind, sind in der Regel mindestens zu 10%, bevorzugt zu 25% und insbesondere bevorzugt mindestens zu 50% neutralisiert. Es ist jedoch ebenfalls möglich, die im erfindungsgemäßen Polyurethan enthaltenen ionisierbaren Gruppen zu wenigstens 75% oder beispielsweise auch weitgehend vollständig, d.h. zu etwa 100%, zu neutralisieren.

Das erfindungsgemäße Polyurethan soll vorzugsweise nicht kristallin und nicht semikristallin sein und ein Zahlenmittel des Molekulargewichts (Mₙ) von mindestens 2.700 bzw. ein Gewichtsmittel des Molekulargewichts (M_{w}) von etwa 5.000 g/mol aufweisen. Die erforderliche Untergrenze des Molekulargewichts ist von der gewünschten Morphologie der nach der physikalischen Trocknung erhältlichen Beschichtung abhängig. In der Regel sollte die Untergrenze so gewählt werden, daß aus der erfindungsgemäßen Beschichtungszusammensetzung optisch einwandfreie und bereits vor der UV-Bestrahlung feste, klebfreie oder staubtrockene Oberflächen entstehen. Dies kann in Abhängigkeit vom Aufbau des Polyurethans schon bei Molekulargewichten ab etwa 2.700 (Mₙ) gewährleistet sein, es können jedoch auch höhere Untergrenzen für das Molekulargewicht Mₙ erwünscht sein, beispielsweise 3.000, 4.000, 5.000 oder sogar 8.000 bis 10.000 Dalton. Die Obergrenze wird weitgehend durch die nach dem jeweils eingesetzten Syntheseverfahren erreichbare Obergrenze bestimmt. Weitere begrenzende Faktoren sind beispielsweise die Lösungsviskosität des Polyurethans und die Verarbeitungs- und Vernetzungseigenschaften der resultierenden Beschichtungsmittelzusammensetzung. In der Regel ist eine Obergrenze von etwa 100.000 Dalton für Mₙ ausreichend, wobei das Molekulargewicht auch weniger, beispielsweise 50.000 oder 30.000 Dalton, betragen kann.

Das Molekulargewicht kann dabei durch dem Fachmann bekannte Methoden wie beispielsweise Membranosmometrie, Dampfdruckosmometrie, Gelpermeationschromatographie, Time-Of-Flight-Massenspektrometrie, Viskosimetrie oder Lichtstreuung ermittelt werden.

Die Erfindung betrifft ebenfalls ein Verfahren zur Herstellung des erfindungsgemäßen Polyurethans, wie oben beschrieben, bei dem Polyisocyanate der Komponente a) mindestens mit einem oder mehreren Polyolen der Komponente b) und mindestens einer Verbindung der Komponente c), sowie gegebenenfalls mit einer der Komponenten d), e) oder f) oder einem Gemisch aus zwei oder mehreren davon, umgesetzt werden.

Gegenstand der Erfindung ist weiterhin eine wäßrige Polyurethandispersion, die mindestens eines der vorstehend beschriebenen, in Wasser im wesentlichen selbst dispergierbaren Polyurethane, hergestellt aus den Komponenten a), b) und c) sowie gegebenenfalls d), e) oder f) oder einem Gemisch aus zwei oder mehreren davon, enthält. Wenn die Polyurethane unter Verwendung der Komponente f) hergestellt wurden, so enthalten sie mindestens eine olefinisch ungesättigte Doppelbindung in der Polymerkette. Solche Polyurethandispersionen sind nach der Trocknung, d.h. nach wenigstens weitgehender Entfernung von Wasser und gegebenenfalls anwesenden organischen Lösemitteln, durch Bestrahlung mit UV-Licht vernetzbar.

Wenn die erfindungsgemäßen Polyurethane ohne Verbindungen der Komponente f) hergestellt wurden, dann werden die erfindungsgemäßen Polyurethandispersionen mit einer weiteren Komponente, die Verbindungen mit radikalisch polymerisierbaren, olefinisch ungesättigten Doppelbindungen enthält, abgemischt. Eine solche Mischung kann jedoch auch dann vorgenommen werden, wenn das eingesetzte erfindungsgemäße Polyurethan olefinisch ungesättigte Doppelbindungen enthält.

Als olefinisch ungesättigte Doppelbindungen bieten sich insbesondere olefinische Doppelbindungen aus α,β-ungesättigten Esterverbindungen, wie beispielsweise den Estern der Acrylsäure oder der Methacrylsäure, an. Diese ungesättigte Estergruppen enthaltenden Verbindungen können in fester, flüssiger oder in organischen Lösungsmitteln gelöster Form oder als Dispersion oder Emulsion einer chemisch gebundene ungesättigte Estergruppen enthaltenden Verbindung mit dem erfindungsgemäßen Polyurethan vor oder nach der Dispergierung in Wasser, vermischt werden.

Vorzugsweise handelt es sich bei der ungesättigte Estergruppen enthaltenden Verbindung um ein Polymeres oder ein Gemisch aus mehreren Polymeren, wobei das Polymere oder die Polymeren Polyaddukte, Polykondensate oder radikalisch hergestellte Polymere sein können. Die chemische Anbindung der ungesattigten Gruppen kann durch Copolymerisation eines eine oder mehrere ungesättigte Estergruppen aufweisenden Monomeren oder, insbesondere im Falle eines durch radikalische Polymerisation hergestellten Polymeren, durch eine nachträgliche polymeranaloge Umsetzung erfolgen. Diese polymeranaloge Umsetzung kann entweder in organischer Lösung vor der Zugabe zur erfindungsgemäßen Dispersion oder in der erfindungsgemäßen Dispersion selbst stattfinden.

Bevorzugt ist es, olefinisch ungesättigte Doppelbindungen enthaltende Polymere einzusetzen. Hierzu zählen beispielsweise Polyester, wie sie durch Umsetzung von Polyolen, wie sie beispielsweise unter b1.2) und b1.3) beschrieben wurden, mit zwei- bis vierwertigen, beispielsweise unter b1.1) beschriebenen, Carbonsäuren und beispielsweise (Meth)acrylsäure erhältlich sind.

Die gegebenenfalls zusätzlich zum erfindungsgemäßen Polyurethan in die Dispersion eingebrachten, olefinisch ungesättigte Doppelbindungen enthaltenden Polymeren haben in der Regel ein Molekulargewicht von wenigstens etwa 300, vorzugsweise wenigstens etwa 400. Bevorzugt weisen diese Polymeren keine Urethangruppen auf.

Der Gehalt an ungesättigten Estergruppen, bezogen auf die Trockenmasse der Dispersion, bevorzugt bezogen auf die Trockenmasse der polymeren Bindemittel, beträgt zwischen etwa 50 und etwa 2.500, vorzugsweise etwa 100 bis etwa 2.000 und besonders bevorzugt etwa 150 bis etwa 1.500 mmol/kg.

Der Begriff 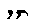 *polymere Bindemittel* 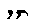 , der zur Festlegung der Konzentration an Verbindungen der Komponente c) und an olefinisch ungesättigten Doppelbindungen verwendet wird, bezieht sich für den Fall, daß das erfindungsgemäße Polyurethan solche olefinisch ungesättigten Doppelbindungen enthält und in der erfindungsgemäßen Dispersion kein weiteres olefinisch ungesättigte Doppelbindungen enthaltendes Polymeres mehr vorhanden ist, ausschließlich auf das erfindungsgemäße Polyurethan. Für den Fall, daß das erfindungsgemäße Polyurethan keine olefinisch ungesättigten Doppelbindungen aufweist und in der erfindungsgemäßen Dispersion neben dem erfindungsgemäßen Polyurethan noch eine weitere, olefinisch ungesättigte Doppelbindungen aufweisende polymere Bindemittelkomponente vorliegt, bezieht sich der Begriff 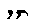 *Festharz* 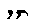 auf die Gesamtmenge an polymerem Bindemittel, bestehend aus erfindungsgemäßem Polyurethan und weiteren, olefinisch ungesättigte Doppelbindungen enthaltenden polymeren Bindemitteln. Gleiches gilt, wenn neben dem olefinisch ungesättigte Doppelbindungen enthaltenden erfindungsgemäßen Polyurethan weitere olefinisch ungesättigte Doppelbindungen enthaltende polymere Bindemittel eingesetzt werden.

Der Wasseranteil in den erfindungsgemäßen Dispersionen oder Emulsionen liegt zwischen etwa 20 und etwa 80 Gew.-%, bevorzugt zwischen etwa 25 und etwa 70 Gew.-% und besonders bevorzugt zwischen etwa 30 und etwa 65 Gew.-%.

Der Polyurethananteil, bezogen auf das gesamte Festharz, beträgt mindestens etwa 20 Gew.-%, bevorzugt mindestens etwa 40 Gew.-% und besonders bevorzugt mindestens etwa 60 Gew.-%.

Weiterhin betrifft die Erfindung ein Verfahren zur Herstellung einer wäßrigen Polyurethandispersion, bei dem mindestens ein erfindungsgemäßes Polyurethan, gegebenenfalls zusammen mit weiteren polymeren Bindemitteln und weiteren beschichtungsmittelüblichen Zusatzstoffen, in Wasser gelöst oder dispergiert wird.

Ein weiterer Gegenstand der Erfindung ist eine Beschichtungsmittelzusammensetzung, erhältlich, indem mindestens ein erfindungsgemäßes Polyurethan, gegebenenfalls zusammen mit weiteren polymeren Bindemitteln und weiteren beschichtungsmittelüblichen Zusatzstoffen, in Wasser gelöst oder dispergiert wird.

Ebenfalls Gegenstand der Erfindung ist ein Verfahren zur Herstellung einer Beschichtungsmittelzusammensetzung, bei dem mindestens ein erfindungsgemäßes Polyurethan, gegebenenfalls zusammen mit weiteren polymeren Bindemitteln und weiteren beschichtungsmittelüblichen Zusatzstoffen in Wasser gelöst oder dispergiert wird.

Die erfindungsgemäß hergestellte Beschichtungsmittelzusammensetzung enthält noch weitere beschichtungsmittelübliche Zusatzstoffe. Hierzu zählen insbesondere Verdickungsmittel, Pigmente, organische Lösemittel in Anteilen von nicht mehr als 20%, Farbstoffe, Emulgatoren, Tenside, Wärmestabilisatoren, Verlaufshilfsmittel, Netzmittel, Füller, Sedimentationsinhibitoren, Flammhemmer und/oder Antioxidantien, die zu jedem beliebigen Zeitpunkt während der Herstellung der Beschichtungsmittelzusammensetzung gleichzeitig oder nacheinander zugegeben werden können.

Die erfindungsgemäßen Beschichtungsmittelzusammensetzungen können auf eine Vielzahl von Substraten aufgetragen werden, beispielsweise auf Holz, Metall, Glas, Stoff, Leder, Beton, Papier, Kunststoff, Kunststoffschaum und dergleichen.

Ebenfalls Gegenstand der vorliegenden Erfindung ist daher ein Verfahren zur Beschichtung von Gegenständen mit den erfindungsgemäßen Polyurethandispersionen oder Beschichtungsmittelzusammensetzungen, bei dem die Gegenstände mit der erfindungsgemäßen Polyurethandispersion oder Beschichtungsmittelzusammensetzung mittels eines in der Beschichtungsmitteltechnik üblichen Verfahrens, wie Walzen, Streichen, Rakeln, Spritzen, Tauchen oder einer sonstigen Technik, auf den Gegenstand aufgetragen werden, zunächst getrocknet und anschließend durch Bestrahlung mit UV-Strahlen vernetzt werden.

Ebenfalls Gegenstand der Erfindung sind mit einer der erfindungsgemäßen Polyurethandispersionen oder Beschichtungsmittelzusammensetzungen beschichtete Gegenstände, vorzugsweise nach obigem Verfahren.

### BEISPIELE

### Abkürzungen

- DETA: Diethylentriamin
- DMEA: Dimethylethanolamin
- DMPA: Dimethylolpropionsäure
- IPDI: Isophorondiisocyanat
- MEK: Methylethylketon
- MG: Molgewicht
- TMP: Trimethylolpropan
- Th.: Theorie
- Tl.: Teile

Die folgenden Photoinitiatoren wurden gemäß der Erfindung in die beschriebenen Polyurethane eingebaut:
A. Photoinitiator I: IRGACURE 500 (Fa. CIBA-GEIGY) = 1:1-Gemisch aus Benzophenon und 1-Hydroxy-cyclohexylphenylketon
B. Einbaubarer Photoinitiator II: Benzophenontetracarbonsäuredianhydrid
C. Einbaubarer Photoinitiator III: IRGACURE 2959 (Fa. CIBA-GEIGY) 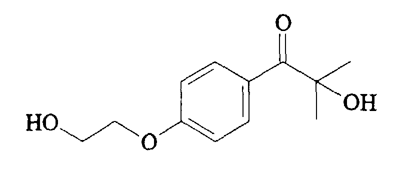
D. Einbaubarer Photoinitiator IV: Phenylglyoxylsäure
E. Einbaubarer Photoinitiator V: 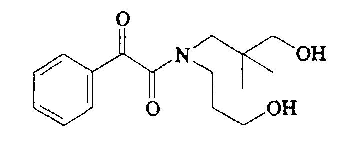
F. Einbaubarer Photoinitiator VI:

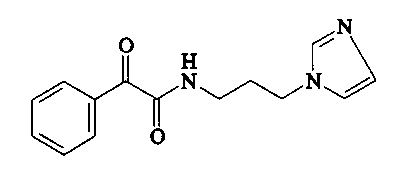

### Herstellvorschrift für Photoinitiator V

Eine Mischung aus 161,2 Tl. (1 mol) N-(3-Hydroxy-3,2-dimethyl-propyl)-N-(3-hydroxypropyl)-amin und 180 g (1,1 mol) Phenylglyoxylsäuremethylester wurden 4 Stunden bei 80°C und einem Vakuum von 30 mbar umgesetzt. In dieser Zeit spalteten sich 33,4 Tl. (1,045 mol) Methanol ab. Das Produkt war eine zähe, leicht bräunliche Masse. Durch ¹H-NMR konnte die gewünschte Struktur im Produktgemisch m mindestens 90% nachgewiesen werden. Die Hydroxylzahl betrug 350 mg KOH/g (Th. 365).

### Herstellvorschrift für Photoinitator VI

75,1 Tl. (0,46 mol) Phenylglyoxalsäuremethylester und 300 Tl. Ethanol wurden vorgelegt. 57 Tl. (0,45 mol) N-3-Aminopropylimidazol wurden zugegeben. Nach 2 stündigem Rühren bei Raumtemperatur wurde das Lösemittel entfernt. Das Produkt war eine zähflüssige, fast farblose Masse. Die ¹H-NMR-Analyse wies auf eine Reinheit von mindestens 95% hin.

### DISPERSION 1

400 Tl. (0,4 mol) Polyesterdiol (Basis Adipinsäure, Isophtalsäure und Hexandiol-1,6 mit einem MG von 1000) wurden mit 51,6 Tl. Photoinitiator II (0,16 mol) bei 125°C umgesetzt, bis die Mischung klar wurde. 148,7 Tl. Butandiol-1,4 (1,65 mol) und 300 g MEK wurden zugegeben. Nach Abkühlung auf 70°C wurden 453,5 Tl. IPDI (2,04 mol) hinzugefügt. Nach weiteren 3,5 Stunden wurde der Ansatz mit 600 Tl. Aceton verdünnt, wobei der Isocyanatgehalt 0,9 Gew.-% betrug. (Th. 0,64%). Der Reaktor wurde vor Licht geschützt und 362,3 Tl. Acrylatharz LAROMER® LR 8945 wurden addiert. Zur Neutralisation wurden 22,82 Tl. (0,256 mol) Dimethylethanolamin hinzugefügt (Th. Neutralisationsgrad 80%). Nach Zugabe von 2000 Tl. Wasser und 10,3 Tl. (0,1 mol) DETA wurde das Aceton destillativ entfernt. Feststoffgehalt: 43,7%, pH-Wert 7,2.

### DISPERSION 2

400 Tl. (0,4 mol) Polyester (analog Beispiel 1), 169,8 Tl. (0,8 mol) Photoinitiator III, 40,2 Tl. (0,3 mol) DMPA, 36 Tl. Butandiol-1,4 (0,4 mol) und 250 Tl. MEK wurden vorgelegt. Nach Zugabe von 452,4 Tl. (2,04 mol) IPDI wurde der Ansatz bei 80°C umgesetzt. Nach einer Stunde wurden 33,6 Tl. (0,25 mol) TMP addiert. Nach 3 Stunden wurde der Ansatz mit 500 g Aceton verdünnt, wobei der Isocyanatgehalt 0,69 Gew.-% betrug (Th. 0,71%). Nach Neutralisation mit 24 Tl. NaOH 50%-ig, Zugabe von 1950 g Wasser und Vernetzung mit 8,8 g (0,09 mol) DETA entstand eine opake Dispersion. Feststoffgehalt: 35,8%, pH-Wert 9,7.

### DISPERSION 3

Die Dispersion 3 wurde analog Dispersion 2 hergestellt, mit dem Unterschied, daß nur 84,9 Tl. (0,4 mol) Photoinitiator III aber zusätzlich noch 46,4 Tl. (0,4 mol) Hydroxyethylacrylat verwendet wurden. Der Reaktor wurde vor Licht geschützt. Es entstand eine opake Dispersion. Feststoffgehalt: 37,7%, pH-Wert 8,5.

### DISPERSION 4

200 Tl. (0,1 mol) Polyesterdiol (Basis Adipinsäure, Isophtalsäure und Hexandiol-1,6, MG 2000) 44,94 Tl. (0,34 mol) DMPA, 48,1 Tl. (0,78 mol) Ethylenglykol, 275 Tl. MEK und 21,22 Tl. (0,1 mol) Photoinitiator III und 241,2 Tl. (1,38 mol) eines Isomerengemisches aus 80% 2,4- und 20% 2,6-Toluylendiisocyanat wurden bei 90°C umgesetzt. Nach einer Stunde wurden 6,71 Tl. (0,05 mol) TMP und nach weiteren 3 Stunden 99 Tl. LAROMER® LR 8945 zugegeben. Nach zusätzlichen 2 Stunden bei 90°C wurden 275 Tl. Aceton, 26,8 Tl. NaOH 50%-ig und 1100 Tl. Wasser nacheinander zugegeben. Das Aceton wurde destillativ entfernt. Es entstand eine leicht bräunliche und durchscheinende Dispersion. Feststoffgehalt 36,6%, pH-Wert 8,0.

### DISPERSION 5

Dispersion 5 wurde analog zu Dispersion 2 hergestellt mit dem Unterschied, daß an Stelle von Photoinitiator III 120,1 Tl. (0,8 mol) Photoinitiator IV eingesetzt wurde, wobei in einer ersten Stufe Photoinitiator IV und IPDI ohne weiteren Komponenten 2,5 Stunden bei 90°C mit einander umgesetzt wurden. Nach der Verdünnung mit Aceton betrug der Isocyanatgehalt 0,46%. Es entstand eine leicht gelbliche, opake Dispersion. Feststoffgehalt 34 Gew.-%, pH-Wert 7,6.

### DISPERSION 6

200 Tl. (0,1 mol) Polyesterdiol wie in Dispersion 4 (Basis Adipinsäure, Isophthalsäure und Hexandiol-1,6, MG 2000), 45 Tl. (0,36 mol) DMPA, 46,1 Tl. (0,74 mol) Ethylenglykol, 275 Tl. MEK und 30,5 Tl. (0,1 mol) Photoinitiator V wurden mit 231,9 Tl. (1,33 mol) eines Isomerengemisches aus 80% 2,4- und 20% 2,6-Toluylendiisocyanat 4 Stunden bei 90°C umgesetzt. Anschließend wurden 99 Tl . LAROMER® LR 8945 zugegeben und der Ansatz reagierte lichtgeschützt 2 Stunden bei 90°C. Darauffolgend wurden 275 Tl. Aceton, 26,8 Tl. NaOH 50%-ig und 1100 Tl. Wasser nacheinander zugegeben. Das Aceton wurde destillativ entfernt. Es entstand eine bräunliche, durchscheinende Dispersion. Feststoffgehalt 38,6%.

### DISPERSION 7

200 Tl. Polyesterdiol wie in Dispersion 4 (0,1 mol), 20,1 Tl. DMPA (0,15 mol), 26,1 Tl. Butandiol-1,4 (0,29 mol), 22,0 Tl. Photoinitiator V (0,075 mol) und 200 Tl. MEK wurden vorgelegt. Es wurden 82,7 Tl. TDI (0,475 mol) zugegeben, und es wurde 2 Stunden bei 80°C umgesetzt. Anschließend wurden 45,0 Tl. (0,203 mol) IPDI zugesetzt, und der Ansatz reagierte 2 Stunden bei 80°C. Anschließend erfolgte die Zugabe von 12,9 Tl. (0,05 mol) Photoinitiator VI, und es wurde 6 Stunden bei 75°C umgesetzt.

Anschließend wurde mit 300 Tl. Aceton verdünnt, mit 8,0 Tl. (0,09 mol) DMEA neutralisiert und mit 1.000 Tl. VE-Wasser dispergiert. Das Aceton wurde abdestilliert. Feststoffgehalt: 29,4%, pH-Wert 7,4.

### DISPERSION 8

Dispersion 8 wurde entsprechend Dispersion 7 hergestellt, mit dem Unterschied, daß die Zugabe von Photoinitiator VI unterblieb. Feststoffgehalt: 32,6%, pH-Wert 6,5.

### DISPERSION 9

200 Tl. Polyesterdiol (Basis Adipinsäure, Ethylenglycol; MG = 2.000) (0,1 mol), 32,2 Tl. (0,24 mol) DMPA, 29,3 Tl. (0,325 mol) 1,4-Butandiol und 90 Tl. MEK wurden vorgelegt. 180,1 Tl. (0,18 mol) IPDI wurden zugegeben und der Ansatz etwa 2,5 Stunden bei 90°C umgesetzt. Nach der Zugabe von 6,7 Tl. (0,05 mol) TMP wurde eine weitere Stunde bei 90°C reagieren lassen. Anschließend erfolgte die Zugabe von 36,0 Tl. (0,14 mol) Photoinitiator VI, und es wurde weitere 3 Stunden umgesetzt. Anschließend wurden 350 Tl. Aceton und 17,1 Tl. (0,192 mol) DMEA und 1100 Tl. VE-Wasser zugegeben. Das Aceton wurde abdestilliert. Feststoffgehalt: 29,0%, pH-Wert 7,5.

### VERGLEICHSDISPERSION 1

Vergleichsdispersion 1 wurde analog Dispersion 2 hergestellt, mit dem Unterschied, daß an Stelle von Photoinitiator III 92,9 Tl. (0,8 mol) Hydroxyethylacrylat eingesetzt wurden. Es entstand eine opake Dispersion. Feststoffgehalt: 38,2%, pH-Wert 8,5.

### VERGLEICHSDISPERSION 2

LAROMER® 8949, eine kommerziell erhältliche Polyurethandispersion mit eingebauten Acrylestergruppen der Firma BASF AG.

### Filmherstellung

Aus den oben genannten Dispersionen wurde mit Hilfe einer 200 µm-Spaltrakel ein Film auf eine Glasplatte aufgetragen. Der Film wurde etwa 5 bis 10 Minuten bei Raumtemperatur getrocknet. Anschließend wurde der Film bei 60°C für 20 Minuten im Trockenschrank behandelt.

### Pendelhärte

Die Pendelhärte wurde nach DIN 53 157 mit einem König-Gerät bestimmt. Es wurde die Zeit in Sekunden ermittelt.

### Chemikalienbeständigkeit

Die Chemikalienbestandigkeit wurde in Anlehnung an die DIN 68 861 durchgeführt. Aus dem Gesamtpaket wurden jedoch nur 10 Prüfmittel ausgewählt und Beanspruchungsgruppe 1b entsprechend aufgelegt. Im einzelnen handelte es sich bei den Prüfmitteln um Natriumcarbonat, Rotwein, Pulverkaffee, Johannisbeersaft, Ethyl-butylacetat, Senf, Lippenstift, Desinfektionsmittel, Kugelschreiberpaste und Reinigungsmittel.

### Spritzapplikation

Appliziert wurde mit einer SATA-Jet Fließbecherpistole mit einer Düse von 1,3 bis 1,6 mm. Der Druck am Pistoleneingang betrug etwa 2 bis 2,5 bar. Bei Applikation auf Holz wurden jeweils zwei Schichten von ca. 10 bis 40 g/m², aufgebracht. Zwischen der ersten und der zweiten Schicht wurde der Film (2 min bei 45°C mit Umluft und 15 Minuten bei 60°C) getrocknet und anschließend UV-belichtet. Vor Applikation der zweiten Schicht wurde zwischengeschliffen (Körnung ca. 240). Die zweite Schicht wurde entsprechend der ersten getrocknet und belichtet.

Die Belichtung der getrockneten Filme erfolgte mit einer Dosis (nach Wellenlängen aufgeteilt) von ca. 550 mJ/cm² (320-390 nm), 484 mJ/cm² (280-320 nm), 50 mJ/cm² (250-260 nm), 240 mJ/cm² (395-445 nm) mit einem Quecksilber-Mitteldruckstrahler (120 Watt/cm). **Prüfergebnisse**

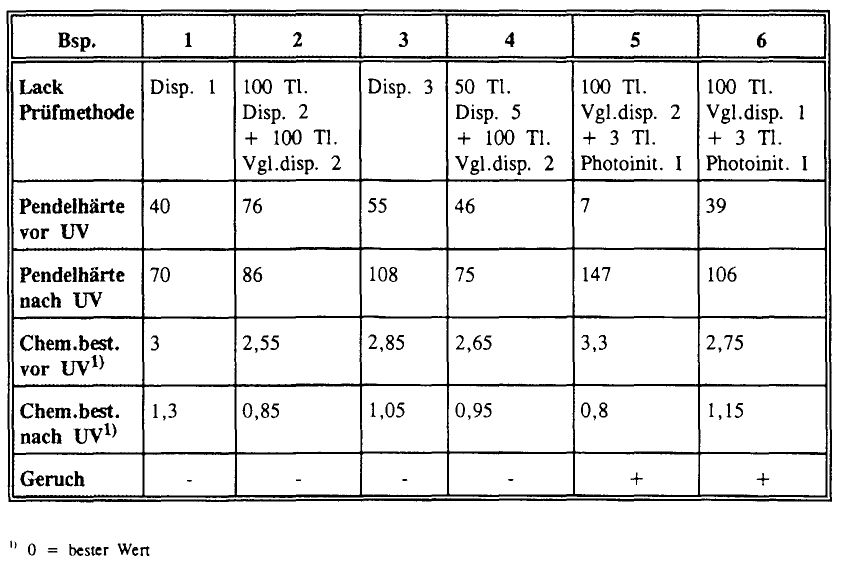

Alle Dispersionen mit kovalent eingebautem Photoinitiator zeigten eine deutliche Verbesserung der Filmbeständigkeit nach UV-Bestrahlung bei hervorragender physikalischer Trocknung.

Bei den Beispielen 5 und 6 wurde nach der Bestrahlung ein leichter Benzaldehydgeruch festgestellt.

Der Vergleich zwischen Beispiel 2 und Beispiel 4 zeigt, daß der kovalent eingebaute Photoinitiator genauso wirksam ist, wie ein entsprechender zugesetzter Photoinitiator. Ein identisches Ergebnis zeigt auch der Vergleich zwischen Beispiel 3 und Beispiel 5.

## Patentansprüche

1. In Wasser im wesentlichen selbstdispergierbares Polyurethan mit einem Zählenmittel des Molekulargewichts Mₙ von größer als 2700, erhältlich durch Umsetzung von
a) mindestens einem Polyisocyanat mit
b) mindestens einem Polyol, bestehend aus
b1) 9 bis 100 mol-% eines Polyols oder eines Gemischs aus mehreren Polyolen mit einem Molekulargewicht von mindestens 500 und
b2) 0 bis 91 mol-% eines Polyols oder eines Gemischs aus mehreren Polyolen mit einem Molekulargewicht von weniger als 500,
wobei b1) und b2) zusammen 100 mol-% der Komponente b) ergeben, und
c) mindestens einem Photoinitiator der allgemeinen Formel I 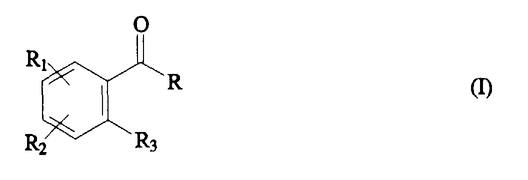 wobei R für einen Rest der Formel II 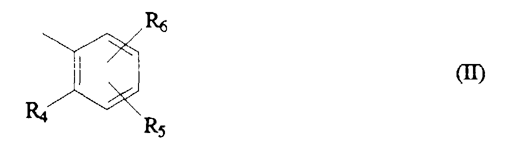 oder für -CR⁷R⁸R⁹, P(=O)(R¹⁰)₂ oder SO₂R¹¹ steht
und mindestens einer der Reste R¹, R², R⁵, R⁶ und R⁹ dem Einbau in das Polyurethan dient
und die verbleibenden Reste R¹, R², R⁵, R⁶ und/oder R⁹ jeweils unabhängig voneinander für Wasserstoff, C₁₋₁₂-Alkyl, C₁₋₁₂-Alkoxyl, Halogen, Cyano, Nitro und/oder Sulfo stehen,
R³ und R⁴ jeweils unabhängig voneinander für Wasserstoff oder COOH oder zusammen für S stehen,
R⁷ und R⁸ jeweils unabhängig voneinander für Wasserstoff, C₁₋₁₂-Alkyl, C₁₋₁₂-Alkenyl, C₁₋₁₂-Alkoxy, Phenyl oder zusammen für =O oder C₂₋₆-Alkylen stehen,
R⁹ für OR¹¹, N(R¹¹)₂, N-Piperidyl, N-Piperazyl oder N-Morpholino steht,
R¹⁰ für C₁₋₁₂-Alkyl, C₁₋₁₂-Alkanoyl, Phenyl oder Benzoyl, die jeweils wiederum mit Halogen, C₁₋₁₂-Alkyl oder C₁₋₁₂-Alkoxy substituiert sein können, steht,
R¹¹ gegebenenfalls jeweils unabhängig voneinander für Wasserstoff oder gegebenenfalls mit OH, NHR¹⁰, NH₂ oder SH substituiertes C₁₋₆-Alkyl, C₁₋₁₂-Alkoxy, Phenyl oder zusammen für C₂₋₅-Alkylen stehen,
wobei, wenn R⁹ für OR¹¹ steht und R¹¹ für Wasserstoff steht, R⁷ und R⁸ in Kombination nicht für Wasserstoff und Phenyl stehen dürfen.

2. Polyurethan nach Anspruch 1, dadurch gekennzeichnet, daß bei der Umsetzung zusätzlich eine Komponente oder ein Gemisch aus mehreren der Komponenten, ausgewählt aus
d) einem Polyamin oder einem Gemisch aus mehreren Polyaminen
e) einer Verbindung oder einem Gemisch aus mehreren Verbindungen mit mindestens einer gegenüber Isocyanaten reaktionsfähigen Gruppe und mindestens einer durch Basen- oder Säurezugabe oder durch Quaternisierung ionisierbaren Gruppe,
f) einer Verbindung oder einem Gemisch aus mehreren Verbindungen mit mindestens einer gegenüber Isocyanaten reaktionsfähigen Gruppe und mindestens einer olefinisch ungesättigten Doppelbindung vorliegt.

3. Verfahren zur Herstellung eines in Wasser im wesentlichen selbstdispergierbaren Polyurethans, bei dem mindestens
a) Polyisocyanate mit
b) Polyolen, und
c) Photoinitiatoren der allgemeinen Formel I 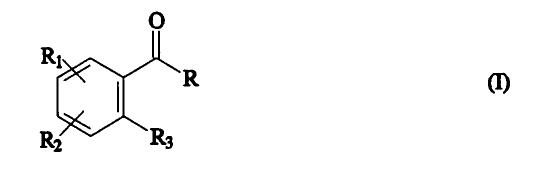 wobei b) und c) wie in Anspruch 1 definiert sind,
so umgesetzt werden, daß das Zehlenmittel des Molekulargewichts Mₙ des Polyurethans größer als 2700 ist.

4. Wäßrige Polyurethandispersion, dadurch gekennzeichnet, daß sie mindestens ein in Wasser im wesentlichen selbstdispergierbares Polyurethan mit einem Zahlenmittel des Molekulargewichts Mₙ größer als 2700, erhältlich durch Umsetzung von
a) Polyisocyanaten mit
b) Polyolen, und
c) Photoinitiatoren der allgemeinen Formel I 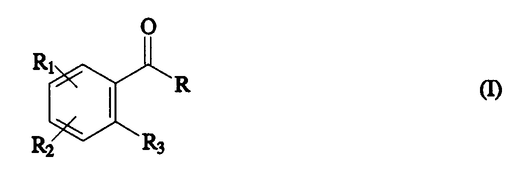 wobei b) und c) wie in Anspruch 1 definiert sind,
enthält.

5. Wäßrige Polyurethandispersion nach Anspruch 4, dadurch gekennzeichnet, daß bei der Umsetzung eine Komponente oder ein Gemisch aus zwei oder mehreren der Komponenten, ausgewählt unter
d) einem Polyamin oder einem Gemisch aus mehreren Polyaminen
e) einer Verbindung oder einem Gemisch aus mehreren Verbindungen mit mindestens einer gegenüber Isocyanaten reaktionsfähigen Gruppe und mindestens einer durch Basen- oder Säurezugabe oder durch Quaternisierung ionisierbaren Gruppe,
f) einer Verbindung oder einem Gemisch aus mehreren Verbindungen mit mindestens einer gegenüber Isocyanaten reaktionsfähigen Gruppe und mindestens einer olefinisch ungesättigten Doppelbindung vorliegt.

6. Verfahren zur Herstellung einer wäßrigen Polyurethandispersion, dadurch gekennzeichnet, daß mindestens
a) Polyisocyanate mit
b) Polyolen, und
c) Photoinitiatoren der allgemeinen Formel I 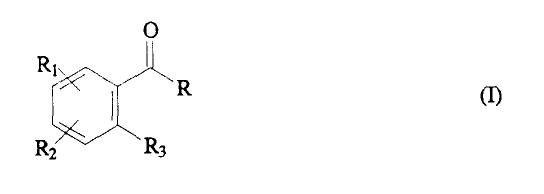 wobei b) und c) wie in Anspruch 1 definiert sind,
miteinander umgesetzt werden und das Produkt, gegebenenfalls nach Neutralisation, in Wasser dispergiert wird.

7. Beschichtungsmittelzusammensetzung, erhältlich, indem mindestens ein Polyurethan nach Anspruch 1 oder 2 oder ein Polyurethan, hergestellt nach Anspruch 3 oder 4, zusammen mit weiteren polymeren Bindemitteln und weiteren beschichtungsmittelüblichen Zusatzstoffen in Wasser gelöst oder dispergiert wird

8. Verfahren zur Herstellung einer Beschichtungsmittelzusammensetzung, dadurch gekennzeichnet, daß mindestens ein Polyurethan nach Anspruch 1 oder 2 oder ein Polyurethan, hergestellt nach Anspruch 3 oder 4, zusammen mit weiteren polymeren Bindemitteln und weiteren beschichtungsmittelüblichen Zusatzstoffen in Wasser gelöst oder dispergiert wird.

9. Verfahren zur Beschichtung von Gegenständen, dadurch gekennzeichnet, daß eine Beschichtungsmittelzusammensetzung gemäß Anspruch 7 oder herstellbar gemäß Anspruch 8 mittels eines in der Beschichtungsmitteltechnik üblichen Verfahrens auf den Gegenstand aufgetragen, zunächst getrocknet und anschließend durch Bestrahlung mit UV-Strahlen vernetzt wird.

10. Gegenstände, beschichtet mit einer wäßrigen Polyurethandispersion gemäß Anspruch 4 oder 5 oder einer wäßrigen Polyurethandispersion, hergestellt gemäß Anspruch 6, oder einer Beschichtungsmittelzusammensetzung, hergestellt gemäß Anspruch 7, oder einer Beschichtungsmittelzusammensetzung, herstellbar mittels eines Verfahrens gemäß Anspruch 8, oder mittels eines Verfahrens gemäß Anspruch 9.
